# EUROPEAN PATENT SPECIFICATION

(11) **EP 3 092 893 B1**
(45) Date of publication and mention of the grant of the patent: **10.07.2019**
(21) Application number: 16169556.4
(22) Date of filing: 13.05.2016
(51) Int. Cl.: A01G 25/06, A01M 21/00, F16L 11/12

(54) **ROOT INTRUSION PROTECTION OF SUBSURFACE DRIP IRRIGATION PIPE**
WURZELEINDRINGSCHUTZ VON UNTERIRDISCHEN TROPFBEWÄSSERUNGSROHREN
PROTECTION CONTRE L'INTRUSION DE RACINES DANS UN TUYAU D'IRRIGATION SOUTERRAIN À GOUTTE-À-GOUTTE

(30) Priority: 13.05.2015 US 201562161234 P; 29.04.2016 US 201615143359
(43) Date of publication of application: 16.11.2016
(73) Proprietor: A. I. Innovations N. V., San Rafael, CA 94901 (US)
(72) Inventor: Ruskin, Rodney, San Rafael, CA 94901 (US); Schupak, Shmuel, 3882000 Metzer (IL)
(74) Representative: Dilg, Haeusler, Schindelmann Patentanwaltsgesellschaft mbH

(56) References cited:
- WO-A1-01/31999
- WO-A1-95/13882
- US-B2- 6 821 928

## Description

### FIELD OF THE INVENTION

This invention relates to slow-release materials and a process for controlling the diffusion rate at which a slow-release material diffuses from a substrate or a carrier, and more particularly, to drip irrigation devices having a controlled release rate of a herbicide that inhibits root growth by incorporating a layer of barrier material between the herbicide and the wall of the drip irrigation tube to reduce the movement of the herbicide through the wall of the pipe.

### BACKGROUND OF THE INVENTION

Subsurface drip irrigation is a well-known irrigation technique with many advantages. A major problem with subsurface drip irrigation is root intrusion into the drip irrigation device such as tapes and pipes. Three techniques exist for preventing root intrusion and include periodic injection of a herbicide through the drip irrigation system, continuous addition of a herbicide to the irrigation water, and/or compounding a herbicide into the plastic material of the drip irrigation device to slowly release it into the soil around the dripper of the device. WO0131999 and WO9513882 both disclose a subsurface drip irrigation device with slow-release bioactive materials to prevent root intrusion into the device.

Dinitro-anilines are the herbicides most commonly used in these methods. Dinitro-anilines have very low solubility in water. While some of the herbicide is carried in the water in suspension through the dripper into the soil, a large proportion of the herbicide migrates through the wall of the drip irrigation pipe into the soil around the dripper and a lot of herbicide ends up too far from the emission points from the dripper that needs to be protected. The addition of dinitro-anilines to the dripper can also impair the adhesion of the dripper to the wall of the drip irrigation pipe or tube.

The slow-release of dinitro-aniline from polymers to protect subsurface drip irrigation systems from root intrusion is well-known. In certain applications, dinitro-aniline is incorporated into the dripper itself. This technology works well with heavy walled tube and round drippers, however, does not work very well with thin-walled drip irrigation tubes or tape. Tapes are formed by various techniques with embossed or printed flow patterns. For tapes, there is no thick molded part or extruded sections into which one can conveniently incorporate the dinitro-aniline. For thin-walled tubes, small flat drippers which are stuck to the side of the wall have been developed and adhesion to the wall is reduced by the addition of dinitro-aniline. Because the release rate of dinitro-aniline is directly proportional to the surface area and inversely proportional to the thickness, it was difficult to achieve a long life cycle for thin-walled tubes and tapes incorporating dinitro-aniline.

Many subsurface drip irrigation systems are protected from root intrusion by means of periodical or continuous injection of a herbicide into the irrigation water. In these cases, between irrigation cycles a large proportion of the herbicide is absorbed into the walls of the tube and from there into the soil far away from the outlet. And, during irrigation cycles, the outlets closest to the injection point receive more herbicide than those at the end of the system. The result is excessive application of the herbicide with both environmental risks and economic costs. In the case of compounding the herbicide into the drip irrigation device to create a herbicide impregnated tube, due to the large surface area a low concentration of the herbicide in the plastic of the tube will deliver enough herbicide to the water and then into the soil to prevent root intrusion. However, in this scenario herbicide will be lost by moving directly into the soil far away from the emission points where the protection against root intrusion is needed. Further, because the herbicide is infused throughout the wall of the tube, the diffusion through the wall and into the soil results in a short useful life of the product. Consequently, a need exists for an improved subsurface drip irrigation system to prevent root intrusion which addresses the drawbacks of existing systems.

### SUMMARY OF THE INVENTION

The present invention is a subsurface drip irrigation system comprising a drip irrigation tube which is extruded and having a herbicide compounded into the extruded tube. The tube includes a barrier layer on the outside of the tube to prevent movement of the herbicide directly into the soil. The herbicide migrates from the tube into the water and within the tube before exiting through the dripper into the soil. According to the invention, a bead containing the herbicide is extruded and (partially) buried into the wall of the tube. The herbicide is slowly released from the bead into the water which in turn passes through the dripper into the soil. The bead can be continuous or it can be in short lengths placed near to the dripper. A layer of barrier material may be placed between the bead and the wall to reduce movement of the herbicide into the wall. The barrier layer can be a complete or partial inner lining or the barrier material can be used as an outer lining of the entire tube. Incorporating a barrier wall for the tube also improves efficiency for embodiments where periodic injection of the herbicide into the water through the drip system or a continuous addition of a herbicide into the irrigation water are utilized.

These and other aspects of the present invention will be more fully understood by reference to the following detailed description and accompanying drawings.

### BRIEF DESCRIPTION OF THE DRAWINGS

FIG. 1 is a cross-sectional view of a drip irrigation tape or tube having an internal flow path with a layer having a bioactive material comprising a herbicide within a polymeric material and an outer barrier layer;
FIG. 2 is a cross-sectional view of a drip irrigation tape or tube similar to FIG. 1 including a bactericide layer positioned with the herbicide layer;
FIG. 3 is a fragmentary cross-sectional perspective view illustrating a drip irrigation tape or tube having an internal flow path with a continuous bead of slow release herbicide-impregnated polymeric material extruded as a continuous bead alongside the flow path and a barrier layer;
FIG. 4 is a fragmentary cross-sectional perspective view showing a drip irrigation tape or tube similar to FIG. 3 in which separate beads are located adjacent to the exit holes of a dripper flow path;
FIG. 5 is a cross-section view showing a drip irrigation tape or tube in which the bead of herbicide-impregnated polymeric material is embedded within the wall of the tape or tube having barrier material; and
FIG. 6 is a cross-sectional view of a drip irrigation tape or tube having an external emitter or dripper.

### DETAILED DESCRIPTION

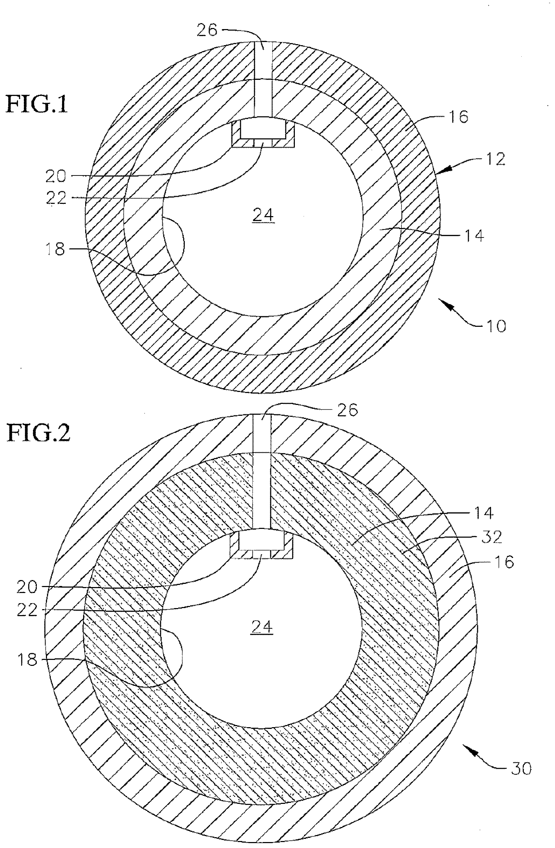

FIG. 1 illustrates a cross-section of a drip irrigation tape or tube 10 not according to the present invention. The tape or tube is a thin-walled product. Such thin-walled tape or tube products are defined by wall thickness generally in the range of about 4 to about 50 mils. It is believed that it is most useful for a drip irrigation tape product to have a wall thickness in the range of about 4 to about 20 mils. A typical wall thickness of such tape products is about 8 mils, although tape products can have a wall thickness up to about 40 mils. It can be useful with thin-walled tubes generally to have a thickness of about 30 to about 50 mils. The tape or tube preferably is made of low density polyethylene. FIG. 1 illustrates a thin-walled tube 12 comprising an inner layer 14 and an outer layer 16. The inner layer is a polyethylene or polyolefin containing a herbicide and the outer layer 16 is a barrier layer preventing the herbicide from moving from the inner layer outwardly into soil in which the drip irrigation device 10 is positioned during use.

Positioned on the inside wall 18 of the inner layer is an emitter or dripper 20 having an inlet 22 for receipt of water through the flow path 24. The flow path extends continuously along the inside of the tube 12. The water enters inlet 22 in the emitter and out of the device through outlet 26 which extends through the inner and outer layers 14, 16. It is to be understood that the drippers are spaced along the length of the tube at predetermined intervals and consequently the outlet 26 extending through the tube are similarly spaced at intervals along the tube. The outlets 26 supply water at a low drip rate and at predetermined spaced-apart intervals along an irrigation line.

As indicated, the tube 12 is a two-layer extrusion wherein the inner layer is a polyolefin containing a herbicide that is slowly released into the water in the flow path 24 through known techniques. The herbicides most commonly used are dinitro-anilines such as trifluralin or pendimethalin. The outer layer is a barrier layer preventing the herbicide from moving from the inner layer directly into the soil. The outer layer can be any one of several barrier resins including but not limited to Saran, EVA, Nylon, PVDC, EVOH, Barex and compounds thereof with or without nano-clays or other additives to further improve the barrier properties. The barrier layer can also be a polyolefin compound containing a barrier material such as nano-clay or submicron silica or a powdered iron oxide of magnetite. Since the barrier layer prevents movement of the herbicide out through the inner layer, all of the herbicide will be carried by the water through the dripper into the soil exactly where it is needed to prevent root intrusion. In addition, the outside barrier layers can be selected to improve the physical properties of the drip irrigation device.

FIG. 2 illustrates an alternative drip irrigation device 30, not according to the invention, similar to drip irrigation device 10 with the addition of a bactericide layer 32 combined with the inner layer 14 and including a dispersed bactericide for use in killing slime-producing bacteria. The bactericide layer and the inner layer are the same layer.

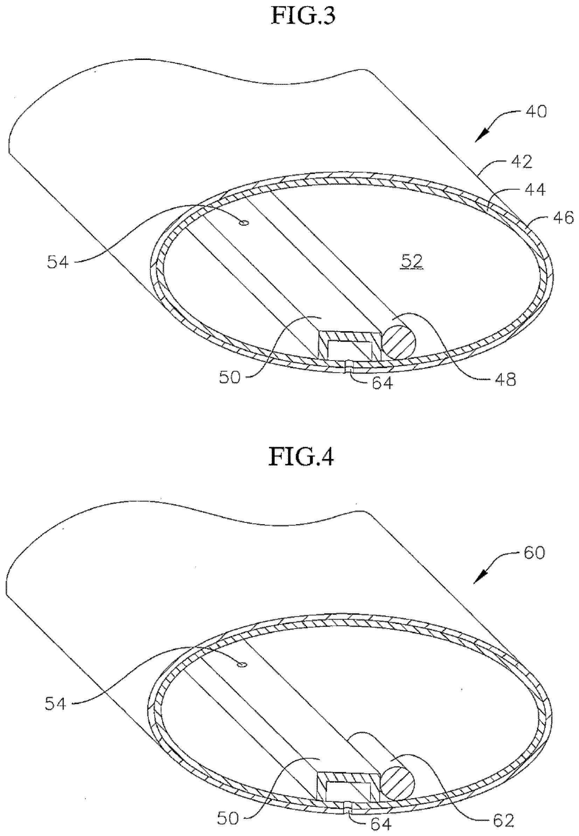

FIG. 3 illustrates another drip irrigation device 40 comprising a multi-layer tube 42 having an inner layer 44 and an outer layer 46. The outer layer 46 is a standard flexible supply tube made of low-density polyethylene. Inside layer 44 is a barrier layer comprising any one of several barrier resins identified earlier. Alternatively, the inner layer can be the standard flexible supply tube and the outer layer can be the barrier material layer. In FIG. 3 a continuous bead 48 of a bioactive material extends continuously along the inside wall of the tube adjacent the emitter or dripper 50 within the flow path 52. Alternatively the bead can be positioned anywhere along the inside wall of the tube.

FIG. 4 illustrates another drip irrigation device 60 wherein the bead 62 of bioactive material is not continuous as in FIG. 3, but rather is separate self-contained beads 62 located adjacent exit holes 64 of the irrigation line. As a further alternative (not shown), the bead of bioactive material can be formed with a larger cross-section as shown in FIG. 2 and a thinner or reduced cross-section between the exit hole so that the largest surface area of the bead is present in the vicinities of the exit holes.

The bead of bioactive materials can be formed by incorporating the bioactive material into a suitable polymeric binder that can be extruded along the inside of the tube and bonded to the inside wall of the tube. FIGs. 3 and 4 illustrate the bead extruded as an elongated cylinder 48 or as separate cylindrical shapes 62 essentially circular in cross-section. This configuration maximizes the surface area to volume ratio of the bead which has a beneficial effect on long-term diffusion rate during use. The bioactive material is a herbicide such as trifluralin, pendimethalin or other dinitro-aniline material, although other herbicides may be used. The herbicide is combined with a suitable carrier, such as carbon black, and impregnated uniformly throughout a polymeric binder material such as low-density polyethylene resin or other polyolefin resins.

Slow-release products such as certain herbicides which are incorporated into polymers such as polyethylene used as the encapsulation matrix are compounded by initially absorbing the herbicide into particles of carbon black. The carbon black is used because it is inert, in particulate form, and capable of absorbing and retaining within it the herbicide molecules similar to the absorption characteristics of a sponge. The carbon black and herbicide can be absorbed at a one-to-one ratio and then blended with a small amount of polyethylene resin in particulate form, and this blended material is later mixed into a standard polyethylene carrier material which can then be formed into the bead of bioactive material. As shown in FIG. 4, the device can be made by co-extruding the beads 62 at twelve inch intervals in which the separate beads are approximately one inch long and extruded in the vicinity of the dripper exit holes 64. This can be done by a timer control on the extrusion die output to stop and start the bead extrusion process. The beads are bonded by hot meld adhesion to the tube material.

The bioactive material can also include dispersed nano-clay particles for reducing the diffusion rate of the slow-release bioactive material. The extruded bead of bioactive material could include such nano-clay particles as described in U.S. Patent 6,821,928.

The drip irrigation devices of FIGS. 3 and 4 since they include a barrier layer, prevent the movement of the herbicide into the walls of the dripline so that all the herbicide will be carrier by the water through the inlet 54 into the dripper 50 and out the exit or outlet hole 64 into the soil exactly where it is needed to prevent root intrusion. For applications where the barrier layer is on the outside of the tube herbicide can be added to both the bead and the inside layer which may be useful in circumstances where a very long life of the device is required. For example, the market for subsurface drip irrigation requires products designed to be used for a range of periods of time. Permanent crops such as vines or olives could require a 20+ year life. Crops like sugar cane and alfalfa are usually replanted about every 7 years. Tomatoes are replanted annually. Using the drip irrigation device of the present invention the device designer can engineer various thicknesses of the tube wall, concentration of the herbicide and the use of nano-clay to match the expected life of root intrusion protection with the crop and the cultural practices of the farmer. In applications which include a bead, the designer can also vary the diameter of the bead as well as the concentration of the herbicide. The decision to use the bead and/or the addition of the herbicide to the tube and/or the impermeable inner or outer lining will depend on the specifics of the particular application.

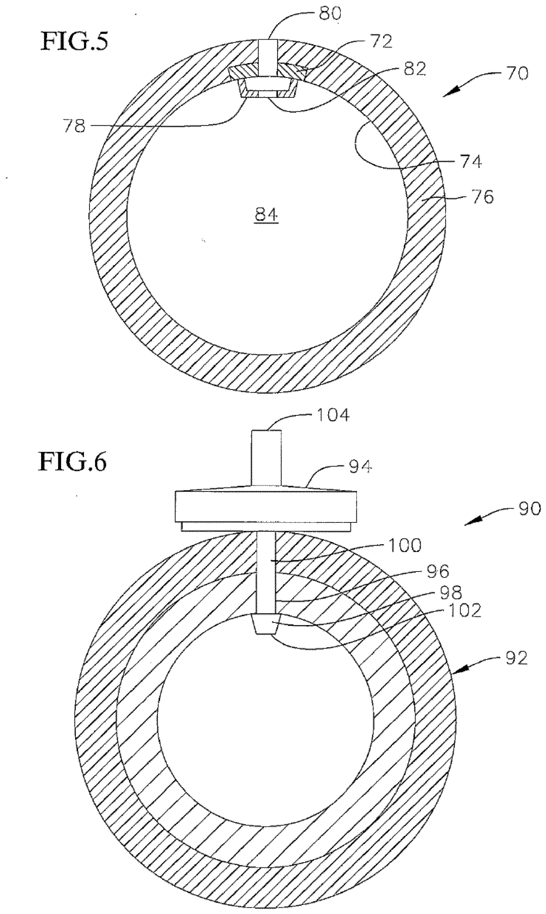

As indicated the barrier layer can include nano-clays which are nanometer sized clay particles that can be incorporated into the polymeric host carrier to assist in providing the barrier. The presence of the nano-clay particles reduces the porosity of the polymer or to assist in providing the barrier. For example, the barrier layer could contain 2% nano-clay. The specific type of nano-clay incorporated can be as disclosed in U.S. Patent 6,821,928. Other types of particles can also be utilized such as submicron silica or magnetite. FIG. 5 illustrates another drip irrigation device 70, not according to the invention, wherein the bead 72 of bioactive material is embedded in the inner wall 74 of the tube 76. The tube includes a barrier layer of nano-clay particles or can be a multiple layer configuration as shown in FIGS. 1-4. The emitter or dripper 78 is positioned over the bead 72 so that water carries the herbicide out the outlet hole 80 into the surrounding soil after entering the inlet hole 82 in the dripper from the flowpath 84. Alternatively the dripper and outlet holes can be positioned at other locations on the tube.

FIG. 6 illustrates another drip irrigation device 90, not according to the invention, having a tube 92 similar to FIG. 1 (however any of the tube configurations shown if FIGS. 2-5 can be used) having an external emitter or dripper 94 which is attached to the tube through the outlet hole 96 by having a barb 98 located at an end of a post 100. Post 100 extends through the tube so that the barb 98 is positioned on the inside of the tube. Dripper 94 has an inlet hole 102 in the barb and an outlet hole 104 on the opposite end.

Although the present invention has been disclosed with various embodiments, it is to be understood that changes and modifications can be made therein which are within the intended scope of the invention as hereinafter claimed.

## Claims

1. A subsurface drip irrigation device (10) comprising:
a tube (12) having a first layer (14) having a releasable herbicide compounded in the first layer (14), and a second barrier layer (16) adjacent the first layer (14);
a plurality of outlets (26) extending through the tube (12) in a spaced relationship along a length of the tube (12); and
a plurality of drippers (20) positioned on the inside surface (18) of the tube (12) in a spaced relationship such that a dripper (20) is positioned over an outlet (26),
wherein the drippers (20) have an inlet (22) for receipt of water flowing through a flow path (24) within the tube (12), and
wherein the second barrier layer (16) prevents outward movement of released herbicide from the first layer (14) directly through the first layer (14) into surrounding soil and directs the released herbicide into the flow path (24) for exiting the drip irrigation device (10) with the water through the drippers (20) and the outlets (26) in the tube (12) to prevent root intrusion into the device (10), the releasable herbicide being compounded into a bead (48, 62) positioned into an inside surface of the first layer (14).

2. The device (10) of claim 1, wherein the releasable herbicide is compounded into the first layer (14) and the barrier layer (16) is positioned around the first layer (14).

3. The device (10) of claim 1, wherein the barrier layer (16) is positioned around the first layer (14), and/or
wherein the barrier layer (16) is positioned on at least a portion of an inside surface of the first layer (14), and/or
wherein the bead (48) is formed as an elongated cylinder and is either a continuous uniform or non-uniform cylinder or separate beads.

4. The device (10) of claim one of claims 1 to 3, wherein the first layer (14) comprises a polyolefin, and/or
wherein the barrier layer (16) comprises a barrier resin selected from the group including Saran, EVA, Nylon, PVDC, EVOH or Barex,
wherein the barrier layer includes in particular nano-clay particles.

5. The device (10) of one of claims 1 to 4, wherein the barrier layer (16) is polyethylene having nano-clay, submicron silica or magnetite particles.

6. The device (10) of one of claims 1 to 5, wherein the herbicide is a dinitro-aniline.

7. The device (10) of one of claims 1 to 6, wherein the first layer (16) comprises a bactericide compounded therein.

8. A method for delivering a herbicide contained within a subsurface drip irrigation device (10) comprising the steps of:
providing a drip irrigation tube (12), having a first layer (14) having a releasable herbicide compounded in the first layer (14), a second barrier layer (16) adjacent the first layer (14), a plurality of outlets (26) extending through the tube (12) in a spaced relationship along the tube (12), a plurality of drippers (20) positioned on an inside surface (18) of the tube (12) in a spaced relationship over an outlet in the tube (12), the releasable herbicide being compounded into a bead (48, 62) positioned into an inside surface of the first layer (14);
providing a stream of water through a flow path (24) in the tube (12);
releasing the herbicide into the flow path (24);
blocking the herbicide from movement through the tube (12) by the barrier layer (16); and
directing the herbicide into an inlet in the dripper (20) and out the outlet (26).

9. The method of claim 8, wherein the the second barrier layer (16) is positioned around an outside surface of the first layer (14).

10. The method of claims 8 or 9, wherein wherein the second barrier layer (16) is positioned on an at least a portion of an inside surface of the first layer (14).

11. The method of one of claims 8 to 10, wherein the first layer (14) comprises a polyolefin.

12. The method of claim one of claims 8 to 11, wherein the second barrier layer (16) comprises a barrier resin selected from the group including Saran, EVA, Nylon, PVDC, EVOH or Barex,
wherein the second barrier layer (16) includes in particular nano-clay particles.

13. The method of one of claims 8 to 12, wherein the second barrier layer (16) is polyethylene having nano-clay, submicron silica or magnetite particles.

14. The method of one of claims 8 to 13, further comprising releasing a bactericide compounded into the first layer (14) into the flow path.

## Patentansprüche

1. Eine unterirdische Tropfbewässerungsvorrichtung (10), aufweisend:
ein Rohr (12) mit einer ersten Schicht (14), die ein freigebbares, in der ersten Schicht (14) vermischtes Herbizid aufweist, und einer zweiten Barriereschicht (16) neben der ersten Schicht (14);
eine Mehrzahl von Ausgängen (26), die sich durch das Rohr (12) in einem beabstandeten Verhältnis entlang einer Länge des Rohres (12) erstrecken; und
eine Mehrzahl von Tropfern (20), die an der inneren Oberfläche (18) des Rohres (12) in einem beabstandeten Verhältnis derart angebracht sind, dass ein Tropfer (20) über einem Ausgang (26) angebracht ist,
wobei die Tropfer (20) einen Eingang (22) zum Erhalten von Wasser aufweisen, das durch einen Flusspfad (24) innerhalb des Rohres (12) fließt, und
wobei die zweite Barriereschicht (16) eine Auswärtsbewegung eines von der ersten Schicht (14) freigegebenen Herbizids direkt durch die erste Schicht (14) in den umgebenden Boden hinein verhindert und das freigegebene Herbizid in den Flusspfad (24) hinein leitet, um die Tropfbewässerungsvorrichtung (10) mit dem Wasser durch die Tropfer (20) und die Ausgänge (26) im Rohr (12) zu verlassen, um ein Eindringen von Wurzeln in die Vorrichtung (10) zu verhindern, wobei das freigebbare Herbizid in einem Kügelchen (48, 62) vermischt ist, das in einer inneren Oberfläche der erste Schicht (14) hinein positioniert ist.

2. Die Vorrichtung (10) gemäß Anspruch 1, wobei das freigebbare Herbizid in der ersten Schicht (14) vermischt ist und wobei die Barriereschicht (16) um die erste Schicht (14) herum positioniert ist.

3. Die Vorrichtung (10) gemäß Anspruch 1, wobei die Barriereschicht (16) um die erste Schicht (14) herum positioniert ist und/oder
wobei die Barriereschicht (16) an zumindest einem Teil einer inneren Oberfläche der ersten Schicht (14) positioniert ist und/oder
wobei das Kügelchen (48) als ein länglicher Zylinder gebildet ist und entweder ein kontinuierlicher gleichmäßiger oder ungleichmäßiger Zylinder oder separate Kügelchen ist.

4. Die Vorrichtung (10) gemäß einem der Ansprüche 1 bis 3, wobei die erste Schicht (14) ein Polyolefin aufweist und/oder
wobei die Barriereschicht (16) ein Barriereharz aufweist, das aus der Gruppe beinhaltend Saran, EVA, Nylon, PVDC, EVOH oder Barex ausgewählt wurde, wobei die Barriereschicht insbesondere Nanoton-Teilchen aufweist.

5. Die Vorrichtung (10) gemäß einem der Ansprüche 1 bis 4, wobei die Barriereschicht (16) Polyethylen mit Nanoton-, Submikron-Kiesel- oder Magnetit-Teilchen ist.

6. Die Vorrichtung (10) gemäß einem der Ansprüche 1 bis 5, wobei das Herbizid ein Dinitroanilin ist.

7. Die Vorrichtung (10) gemäß einem der Ansprüche 1 bis 6, wobei die erste Schicht (16) ein darin vermischtes Bakterizid aufweist.

8. Ein Verfahren zum Liefern eines Herbizids, das innerhalb einer unterirdischen Tropfbewässerungsvorrichtung (10) enthalten ist, aufweisend die folgenden Schritte:
Bereitstellen eines Tropfbewässerungsrohres (12) mit einer ersten Schicht (14), die ein freigebbares, in der ersten Schicht (14) vermischtes Herbizid aufweist, einer zweiten Barriereschicht (16) neben der ersten Schicht (14), einer Mehrzahl von Ausgängen (26), die sich durch das Rohr (12) in einem beabstandeten Verhältnis entlang des Rohres (12) erstrecken, einer Mehrzahl von Tropfern (20), die an einer inneren Oberfläche (18) des Rohres (12) in einem beabstandeten Verhältnis über einem Ausgang im Rohr (12) angebracht sind, wobei das freigebbare Herbizid in einem Kügelchen (48, 62) vermischt ist, das in einer inneren Oberfläche der ersten Schicht (14) hinein positioniert ist;
Bereitstellen eines Wasserstroms durch einen Flusspfad (24) im Rohr (12);
Freigeben des Herbizids in den Flusspfad (24) hinein;
Blockieren, dass das Herbizid sich durch das Rohr (12) bewegt mittels der Barriereschicht (16); und
Leiten des Herbizids in einen Eingang in dem Tropfer (20) hinein und aus dem Ausgang (26) hinaus.

9. Das Verfahren gemäß Anspruch 8, wobei die zweite Barriereschicht (16) um eine äußere Oberfläche der ersten Schicht (14) herum positioniert ist.

10. Das Verfahren gemäß Anspruch 8 oder 9, wobei die zweite Barriereschicht (16) an zumindest einem Teil einer inneren Oberfläche der ersten Schicht (14) positioniert ist.

11. Das Verfahren gemäß einem der Ansprüche 8 bis 10, wobei die erste Schicht (14) ein Polyolefin aufweist.

12. Das Verfahren gemäß einem der Ansprüche 8 bis 11, wobei die zweite Barriereschicht (16) ein Barriereharz aufweist, das aus der Gruppe beinhaltend Saran, EVA, Nylon, PVDC, EVOH oder Barex ausgewählt wurde, wobei die zweite Barriereschicht insbesondere Nanoton-Teilchen aufweist.

13. Das Verfahren gemäß einem der Ansprüche 8 bis 12, wobei die zweite Barriereschicht (16) Polyethylen mit Nanoton-, Submikron-Kiesel- oder Magnetit-Teilchen ist.

14. Das Verfahren gemäß einem der Ansprüche 8 bis 13, ferner aufweisen ein Freigeben eines Bakterizids, das in der ersten Schicht (16) vermischt ist, in den Flusspfad hinein.

## Revendications

1. Dispositif d'irrigation goutte-à-goutte souterrain (10) comprenant :
un tube (12) ayant une première couche (14) ayant un herbicide libérable mélangé dans la première couche (14), et une seconde couche barrière (16) adjacente à la première couche (14) ;
une pluralité d'orifices de sortie (26) s'étendant à travers le tube (12) dans une relation espacée suivant une longueur du tube (12) ; et
une pluralité de goutteurs (20) positionnés sur la surface intérieure (18) du tube (12) dans une relation espacée de sorte qu'un goutteur (20) soit positionné sur un orifice de sortie (26), dans lequel les goutteurs (20) ont un orifice d'entrée (22) pour recevoir de l'eau s'écoulant à travers un trajet d'écoulement (24) au sein du tube (12), et
dans lequel la seconde couche barrière (16) empêche un mouvement vers l'extérieur d'herbicide libéré depuis la première couche (14) directement à travers la première couche (14) dans le sol environnant et dirige l'herbicide libéré dans le trajet d'écoulement (24) pour qu'il sorte du dispositif d'irrigation goutte-à-goutte (10) avec l'eau à travers les goutteurs (20) et les orifices de sortie (26) dans le tube (12) pour empêcher une intrusion de racines dans le dispositif (10), l'herbicide libérable étant mélangé dans un cordon (48, 62) positionné dans une surface intérieure de la première couche (14).

2. Dispositif (10) selon la revendication 1, dans lequel l'herbicide libérable est mélangé dans la première couche (14) et la couche barrière (16) est positionnée autour de la première couche (14).

3. Dispositif (10) selon la revendication 1, dans lequel la couche barrière (16) est positionnée autour de la première couche (14), et/ou
dans lequel la couche barrière (16) est positionnée sur au moins une portion d'une surface intérieure de la première couche (14), et/ou
dans lequel le cordon (48) est formé en tant que cylindre allongé et est soit un cylindre uniforme ou non uniforme continu soit des cordons séparés.

4. Dispositif (10) selon l'une des revendications 1 à 3, dans lequel la première couche (14) comprend une polyoléfine, et/ou
dans lequel la couche barrière (16) comprend une résine barrière sélectionnée dans le groupe incluant le Saran, l'EVA, le nylon, le PVDC, l'EVOH ou le Barex,
dans lequel la couche barrière inclut en particulier des particules de nanoargile.

5. Dispositif (10) selon l'une des revendications 1 à 4, dans lequel la couche barrière (16) est en polyéthylène ayant des particules de nanoargile, de silice submicronique ou de magnétite.

6. Dispositif (10) selon l'une des revendications 1 à 5, dans lequel l'herbicide est une dinitroaniline.

7. Dispositif (10) selon l'une des revendications 1 à 6, dans lequel la première couche (16) comprend un bactéricide mélangé dans celle-ci.

8. Procédé de délivrance d'un herbicide contenu au sein d'un dispositif d'irrigation goutte-à-goutte souterrain (10) comprenant les étapes de :
fourniture d'un tube d'irrigation goutte-à-goutte (12), ayant une première couche (14) ayant un herbicide libérable mélangé dans la première couche (14), une seconde couche barrière (16) adjacente à la première couche (14), une pluralité d'orifices de sortie (26) s'étendant à travers le tube (12) dans une relation espacée le long du tube (12), une pluralité de goutteurs (20) positionnés sur une surface intérieure (18) du tube (12) dans une relation espacée sur un orifice de sortie dans le tube (12), l'herbicide libérable étant mélangé dans un cordon (48, 62) positionné dans une surface intérieure de la première couche (14) ;
fourniture d'un courant d'eau à travers un trajet d'écoulement (24) dans le tube (12) ;
libération de l'herbicide dans le trajet d'écoulement (24) ;
blocage d'un mouvement de l'herbicide à travers le tube (12) par la couche barrière (16) ; et
direction de l'herbicide dans un orifice d'entrée dans le goutteur (20) et hors de l'orifice de sortie (26).

9. Procédé selon la revendication 8, dans lequel la seconde couche barrière (16) est positionnée autour d'une surface extérieure de la première couche (14).

10. Procédé selon les revendications 8 ou 9, dans lequel la seconde couche barrière (16) est positionnée sur au moins une portion d'une surface intérieure de la première couche (14).

11. Procédé selon l'une des revendications 8 à 10, dans lequel la première couche (14) comprend une polyoléfine.

12. Procédé selon l'une des revendications 8 à 11, dans lequel la seconde couche barrière (16) comprend une résine barrière sélectionnée dans le groupe incluant le Saran, l'EVA, le Nylon, le PVDC, l'EVOH ou le Barex,
dans lequel la seconde couche barrière (16) inclut en particulier des particules de nanoargile.

13. Procédé selon l'une des revendications 8 à 12, dans lequel la seconde couche barrière (16) est en polyéthylène ayant des particules de nanoargile, de silice submicronique ou de magnétite.

14. Procédé selon l'une des revendications 8 à 13, comprenant en outre la libération d'un bactéricide mélangé dans la première couche (14) dans le trajet d'écoulement.
